# EUROPÄISCHE PATENTSCHRIFT

(11) **EP 1 982 081 B1**
(45) Veröffentlichungstag und Bekanntmachung des Hinweises auf die Patenterteilung: **04.11.2009**
(21) Anmeldenummer: 07700213.7
(22) Anmeldetag: 11.01.2007
(51) Int. Cl.: F16B 21/09, F16B 5/07

(54) **VORRICHTUNG ZUM BEFESTIGEN EINES MIT ZUNGENARTIGEN VORSPRÜNGEN AUSGEBILDETEN ANBAUTEILES AN EINEM TRÄGERTEIL**
DEVICE FOR FASTENING AN ADD-ON PART, WHICH IS FORMED WITH TONGUE-LIKE PROJECTIONS, TO A SUPPORT PART
DISPOSITIF POUR FIXER SUR UNE PIECE DE SUPPORT UN COMPOSANT CONFIGURE AVEC DES SAILLIES EN FORME DE PATTE

(30) Priorität: 26.01.2006 DE 102006003663
(43) Veröffentlichungstag der Anmeldung: 22.10.2008
(73) Patentinhaber: A. RAYMOND ET CIE, 38000 Grenoble (FR)
(72) Erfinder: COCHARD, Mathieu, F-38700 La Tronche (FR)
(74) Vertreter: Rüttgers, Joachim
(86) Internationale Anmeldenummer: PCT/EP2007/000184
(87) Internationale Veröffentlichungsnummer: WO 2007/085347

(56) Entgegenhaltungen:
- EP-A- 0 326 324
- GB-A- 1 244 008

## Beschreibung

Die Erfindung betrifft eine Vorrichtung zum Befestigen eines mit zungenartigen Vorsprüngen ausgebildeten Anbauteiles an einem Trägerteil.

Bei der herkömmlichen Befestigung eines mit zungenartigen Vorsprüngen ausgebildeten Anbauteiles an einem Trägerteil sind in den Zungen häufig Ausnehmungen vorgesehen, die mit an dem Trägerteil angebrachten Rastnasen oder Raststiften in Eingriff kommen. Nachteilig bei diesen Ausgestaltungen ist jedoch, dass häufig die Verbindung nicht oder nur sehr aufwendig zu lösen ist. Weiterhin müssen sehr enge Toleranzen eingehalten werden, damit der Eingriff überhaupt zustande kommt.

Ein Beispiel für eine herkömmliche Befestigungsvorrichtung ist in GB - 12 44 008 A offenbart. Diese Schrift zeigt eine Vorrichtung zum Befestigen eines mit zungenartigen Vorsprüngen ausgebildeten Anbauteiles an einem Trägerteil mit einem Glied (**220**), wobei das Glied (**220**) eine einen Aufnahmeraum (**250**) umgebende Käfigwand aufweist, an der eine in den Aufnahmeraum (**250**) hineinragende Rampenstruktur (**256**) mit einem von einer Eintrittsseite (**282**) zu einer Haltestücksseite (**252**) des Glieds (**220**) ansteigend schräg gestellten Schrägstück (**256**) und einem Haltestück (**252**) ausgebildet ist, wobei das Haltestück (**252**) von einer Anlageseite der Käfigwand einen größeren Abstand als der der Eintrittsseite (**282**) benachbarte Bereich des Schrägstücks (**256**) aufweist.

Der Erfindung liegt die Aufgabe zugrunde, eine Vorrichtung zum Befestigen eines mit zungenartigen Vorsprüngen ausgebildeten Anbauteiles an einem Trägerteil anzugeben, mit der das Trägerteil auch bei nicht exakter Maßhaltung zuverlässig mit dem Trägerteil verbindbar und in einfacher Art und Weise auch wieder von diesem lösbar ist.

Diese Aufgabe wird erfindungsgemäß mit einer Vorrichtung gemäß Patentanspruch 1 gelöst.

Durch die Ausgestaltung der erfindungsgemäßen Vorrichtung gemäß Patentanspruch 1 lassen sich die Glieder der Vorrichtung nach und nach an mit einem verbreiteten Kopf ausgebildeten, mit dem Trägerteil verbundenen Stiften mit der Eintrittsseite anordnen und so verschieben, dass der Kopf an der Rampenstruktur aufgleitet sowie nach Positionieren im Bereich des Haltestückes die zungenartigen Vorsprünge des Anbauteiles gegen das Trägerteil drückt, so dass das Anbauteil fixiert ist. Nach einem weiteren Bewegen der Glieder gleiten die Köpfe zu der Austrittsseite weiter, bis die erfindungsgemäße Vorrichtung wieder frei ist. Auf diese Art und Weise lässt sich das Anbauteil wiederholt und insbesondere zerstörungsfrei mit dem Trägerteil verbinden.

Weitere vorteilhafte Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Vorrichtung mit einem ab- schlussseitigen Endglied und einer Anzahl von mit dem Endglied verbundenen Zwischengliedern mit Blick auf eine Deckseite,
- Fig. 2: in einer perspektivischen Ansicht ein Zwischenglied des Ausführungsbeispieles gemäß Fig. 1 mit Blick auf eine der Deckseite gegenüberliegende Anlageseite,
- Fig. 3: in einer Schnittansicht das Ausführungsbeispiel gemäß Fig. 1 in einer Vormontagestellung vor dem Befestigen eines Anbauteiles an einem Trägerteil,
- Fig. 4: die Anordnung gemäß Fig. 3 mit dem Ausführungsbeispiel gemäß Fig. 1 in einer Fixierstellung und
- Fig. 5: die Anordnung gemäß Fig. 3 und Fig. 4 mit dem Ausfüh- rungsbeispiel in einer Freigabestellung.

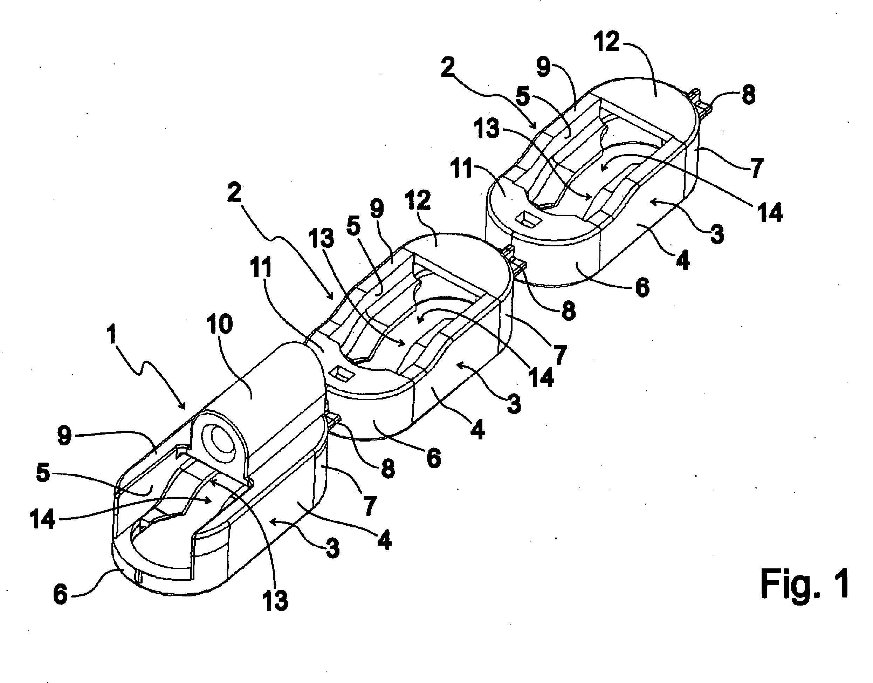

Fig. 1 zeigt in einer perspektivischen Ansicht ein Ausführungsbeispiel einer erfindungsgemäßen Vorrichtung mit einer Anzahl von Gliedern, die in der ausschnittsweisen Ansicht gemäß Fig. 1 als ein abschlussseitiges Endglied 1 sowie als eine Anzahl von mit dem Endglied 1 verbundenen Zwischengliedern 2 ausgebildet sind. Sowohl das Endglied 1 als auch die Zwischenglieder 2 weisen eine umfänglich geschlossene Käfigwand 3 mit zwei in einem Abstand voneinander angeordneten, zueinander parallelen Seitenabschnitten 4, 5 und zwei ebenfalls einander gegenüberliegenden, gebogenen und die Seitenabschnitte 4, 5 miteinander verbindende Endabschnitte 6, 7 auf. Das Endglied 1 und die Zwischenglieder 2 sind miteinander über zwischenliegende, bei dem dargestellten und erläuterten Ausführungsbeispiel flexible, einstückig ausgebildete Verbindungsstücke 8 miteinander verbunden, so dass die Glieder 1, 2 mit einer gewissen Vorspannung verkippbar und verdrehbar sind.

Bei einem nicht dargestellten Ausführungsbeispiel weisen die Verbindungsstücke ein Gelenk auf, so dass die Glieder 1, 2 ähnlich wie bei dem dargestellten erläuterten Ausführungsbeispiel verkippbar und verdrehbar sind.

Das Endglied 1 verfügt auf seiner dem benachbarten Zwischenglied 2 zugewandten Seite über eine an einer Deckseite 9 angebrachte Schraubenaufnahmehülse 10 als Gewindeanordnung, in die von der dem benachbarten Zwischenglied 2 abgewandten Seite eine in Fig. 1 nicht dargestellte Schraube einschraubbar ist. Die Zwischenglieder 2 wiederum sind an ihrer Deckseite 9 mit die Endabschnitten 6, 7 überdeckende Randabdeckungen 11, 12 ausgebildet.

Weiterhin lässt sich Fig. 1 entnehmen, dass das Endglied 1 als auch die Zwischenglieder 2 mit einer Rampenstruktur 13 ausgebildet sind, die von den Seitenabschnitten 4, 5 wegweisend in einen von der Käfigwand 3 umschlossenen Aufnahmeraum 14 hineinragen.

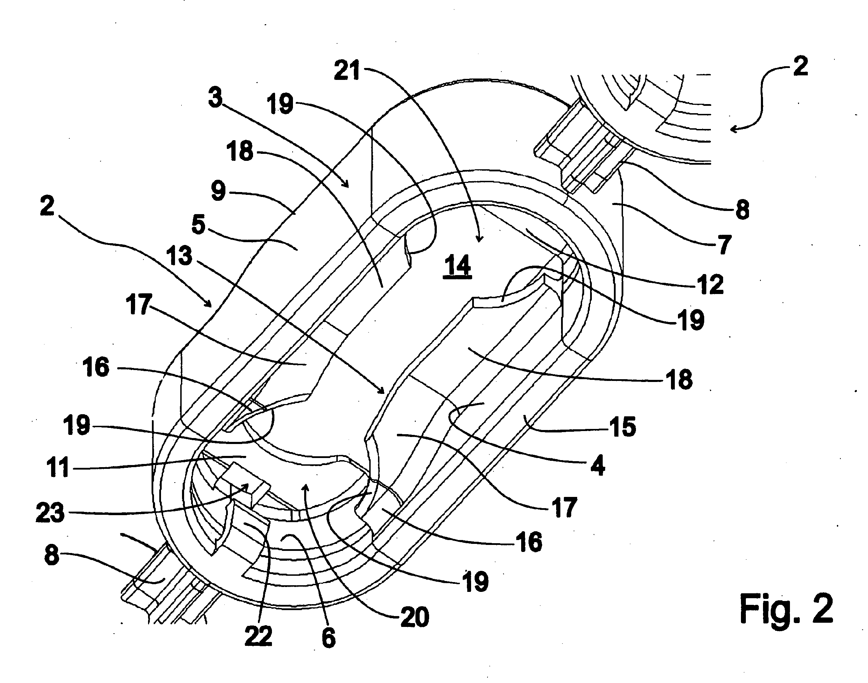

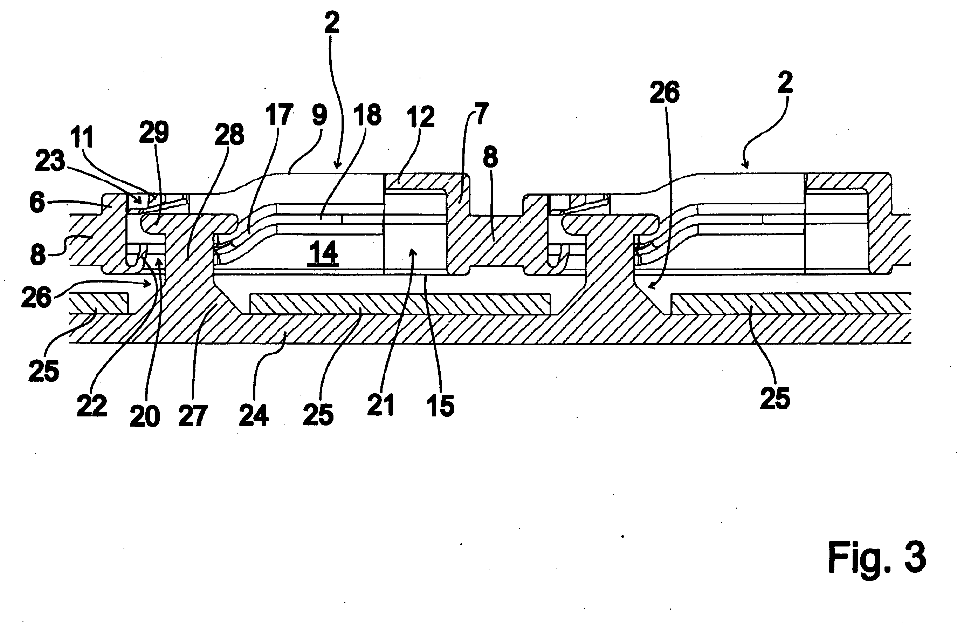

Fig. 2 zeigt in einer perspektivischen Ansicht ein Zwischenglied 2 des Ausführungsbeispieles gemäß Fig. 1 mit Blick auf eine der Deckseite 9 gegenüberliegende plane, in einer Ebene liegende Anlageseite 15 der Käfigwand 3. Aus Fig. 3 ist ersichtlich, dass die Rampenstruktur 13 jedes Zwischengliedes 2 zwei im Wesentlichen parallel zu der Anlageseite 15 ausgerichtete Eintrittsstücke 16 aufweist, die jeweils an einem Seitenabschnitt 4, 5 auf der dem Endglied 1 zugewandten Seite angesetzt sind und sich in den Aufnahmeraum 14 erstrecken. An jedes Eintrittsstück 16 schließt sich ein Schrägstück 17 der Rampenstruktur 13 an, die ebenfalls mit den Seitenabschnitten 4, 5 verbunden und so schräg angestellt sind, dass sie von der den jeweiligen Eintrittsstück 16 zugewandten Ende von der Anlageseite 15 weg in Richtung der Deckseite 9 ansteigen. An dem dem jeweiligen Eintrittsstück 16 abgewandten Ende jedes Schrägstückes 17 ist ein flaches, sich ebenfalls parallel zu der Anlageseite 15 erstreckendes Haltestück 18 der Rampenstruktur 13 angeformt.

Die durch die Eintrittsstücke 16, Schrägstücke 17 und Haltestücke 18 gebildete Rampenstruktur 13 weist an ihren den Endabschnitten 6, 7 der Käfigwand 3 zugewandten Enden rundliche Einbuchtungen 19 auf, so dass auf einer dem Endglied 1 zugewandten Eintrittsseite 20 und einer dem Endglied 1 abgewandten Austrittsseite 21 gegenüber den übrigen Abschnitten der Rampenstruktur 13 im Querschnitt erweiterte Bereiche geschaffen sind.

Auf der Eintrittsseite 20 ist eine sich von der Anlageseite 15 in den Aufnahmeraum 14 erstreckende biegsame, zungenartige Rastnase 22 angeformt. Der Rastnase 22 gegenüberliegend weist die im Bereich der Eintrittsseite 20 liegende Randabdeckung 11 eine Zugangsöffnung 23 auf, durch die von der Deckseite 9 kommend ein Lösewerkzeug durchführbar ist, um die Rastnase 22 zu manipulieren.

Der Vollständigkeit halber sei an dieser Stelle angemerkt, dass das Endglied 1 bis auf eine fehlende Randabdeckung 11 im Bereich der Eintrittsseite 20, einer fehlenden Rastnase 22 und einem sich nicht vollständig von der Anlageseite 15 bis zu der Deckseite 9 erstreckenden Endabschnitt 6 jedenfalls im Bereich der Rampenstruktur 13 wie die Zwischenglieder 2 aufgebaut ist.

Fig. 3 zeigt in einer Schnittansicht das Ausführungsbeispiel gemäß Fig. 1 und Fig. 2 im Bereich von Zwischengliedern 2 zusammen mit einem Trägerteil 24 und Anbauteilzungen 25 als Vorsprünge eines Anbauteiles, die zwischen mit dem Trägerteil 24 verbundenen Befestigungsstiften 26 angeordnet sind. Jeder Befestigungsstift 26 ist über einen im Querschnitt verdickten Stiftfuß 27 mit dem Trägerteil 24 verbunden und erstreckt sich mit einem im Wesentlichen zylinderförmigen Stiftschaft 28 von dem Trägerteil 24 weg. An jeden Stiftschaft 28 ist ein tellerartiger, umfänglich über den Stiftschaft 28 überstehender Stiftkopf 29 angesetzt.

In der Anordnung gemäß Fig. 3 ist das Ausführungsbeispiel der erfindungsgemäßen Vorrichtung in einer Vormontagestellung, in der jeder Stiftkopf 29 an der Eintrittsseite 20 unter Einfedern der an den Zwischengliedern 2 ausgebildeten Rastnasen 22 in den Aufnahmeraum 14 eingetreten ist. Durch das Vorsehen der im Bereich der Eintrittsseite 20 angeordneten Randabdeckungen 11 ist sichergestellt, dass bei entsprechender Dimensionierung der Stiftschäfte 28 in ihrer Längsrichtung das Endglied 1 und die Zwischenglieder 2 mit ihrer Anlageseite 15 in einem Abstand von dem Trägerteil 24 angeordnet sind, der größer als die Dicke der Anbauteilzungen 25 ist. Dadurch lässt sich das Anbauteil aufgrund der freien Beweglichkeit der Anbauteilzungen 25 im Wesentlichen widerstandsfrei positionieren.

Aufgrund des Hintergreifens der Stiftköpfe 29 durch die Rastnasen 22 ist die erfindungsgemäße Vorrichtung gegen unbeabsichtigtes Abnehmen gesichert mit dem Trägerteil 24 verbunden, wobei diese Verbindung jedoch durch entsprechende Manipulation der Rastnasen 22 beispielsweise durch ein durch die Zugangsöffnungen 23 durchtretendes Lösewerkzeug wieder lösbar ist.

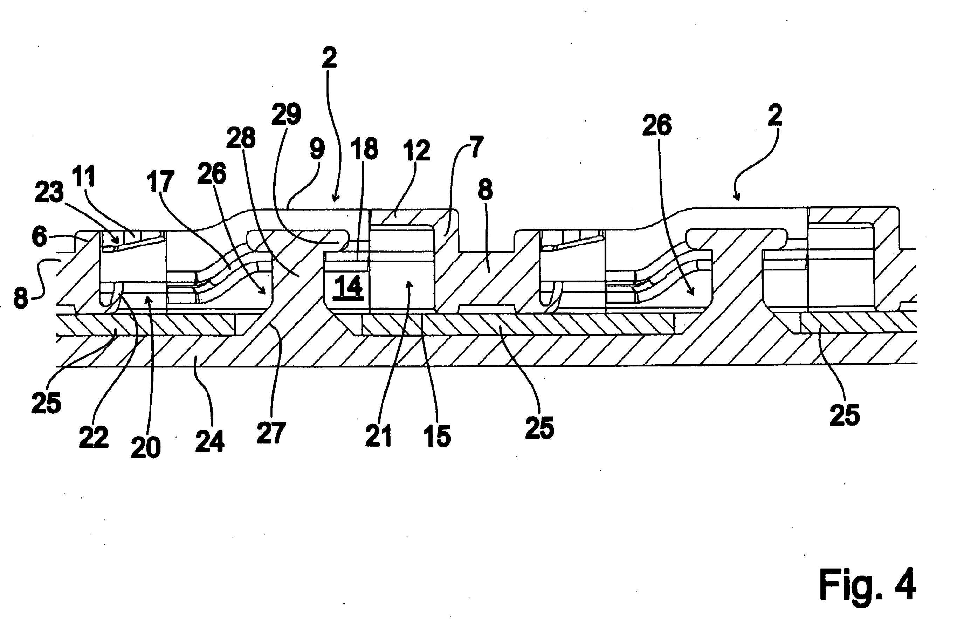

Fig. 4 zeigt die Anordnung gemäß Fig. 3 mit der erfindungsgemäßen Vorrichtung in einer Fixierstellung, die dadurch eingenommen worden ist, dass die erfindungsgemäße Vorrichtung von der Vormontagestellung gemäß Fig. 3 relativ zu den Befestigungsstiften 26 so bewegt worden ist, dass die Stiftköpfe 29 an den Schrägstücken 17 aufgeglitten sind, bis sie an den Haltestücken 28 der Rampenstruktur 13 aufliegen. Dabei ist der Abstand der Haltestücke 18 von der Anlageseite 15 so eingerichtet, dass er dem Abstand zwischen der dem Trägerteil 24 zugewandten Seite des Stiftkopfes 29 und der den Anbauteilzungen 25 zugewandten Seite des Trägerteils 24 abzüglich der Dicke der Anbauteilzungen 25 entspricht oder zum Erhöhen der Klemmwirkung vorzugsweise geringfügig kleiner ist, so dass die Anbauteilzungen 25 großflächig gegen das Trägerteil 24 gedrückt werden und das Anbauteil mit dem Trägerteil 24 verbunden ist.

Die Relativbewegung der Glieder 1, 2 in Bezug auf das Trägerteil 24 wird bei dem dargestellten und erläuterten Ausführungsbeispiel dadurch erzielt, dass eine durch eine aufgestellte Seitenwand des Trägerteils 24 durchgreifende Schraube als einem Teil einer Zug- und Eingriffsanordnung mit der Schraubenaufnahmehülse 10 des Endgliedes 1 als einem weiteren Teil einer Zug- und Eingriffsanordnung in Eingriff kommt und soweit eingeschraubt wird, dass die Fixierstellung gemäß Fig. 4 eingenommen worden ist. Durch die dadurch erzielte Bewegungsblockierung ist die erfindungsgemäße Vorrichtung auch gegen unbeabsichtigtes Verschieben gesichert.

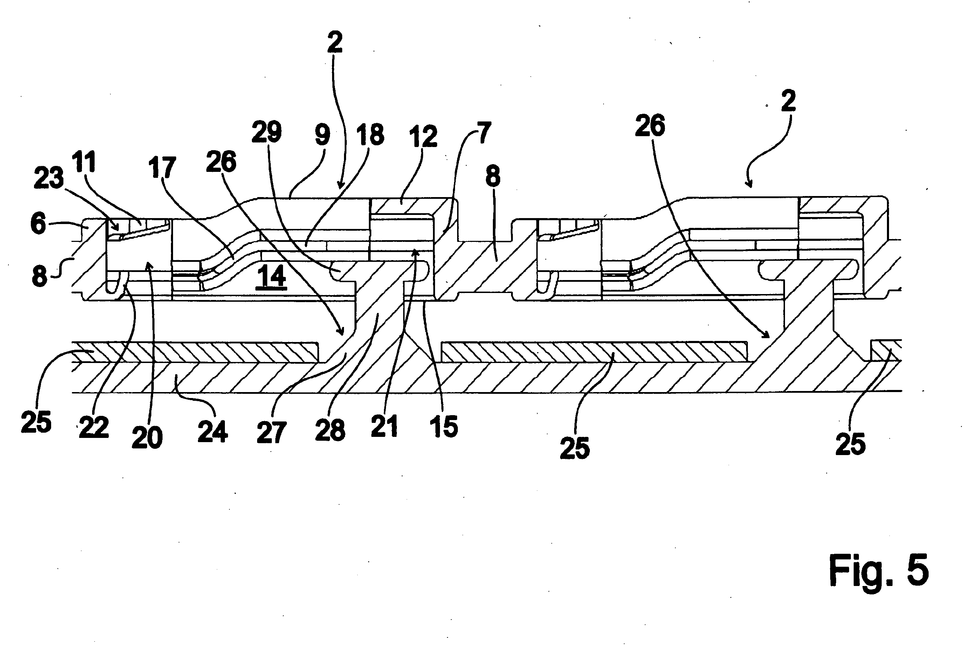

Fig. 5 zeigt die Anordnung gemäß Fig. 3 und Fig. 4 in einer Freigabestellung, in der ausgehend von der Fixierstellung gemäß Fig. 4 die erfindungsgemäße Vorrichtung soweit verschoben worden ist, bis die Stiftköpfe 29 im Bereich der Austrittsseiten 21 der Glieder 1, 2 angeordnet sind und aufgrund der durch Einbuchtungen 19 erzielten Erweiterung wieder aus den Aufnahmeräumen 14 austreten können. In dieser Freigabestellung liegen die Anbauteilzungen 25 wiederum frei, und die erfindungsgemäße Vorrichtung kann ohne Werkzeugunterstützung von dem Trägerteil 24 entfernt werden.

Es versteht sich, dass zum Einnehmen der Freigabestellung gemäß Fig. 5 gegebenenfalls eine Bewegungsblockierung der erfindungsgemäßen Vorrichtung wie beispielsweise in Zusammenhang mit Fig. 4 durch den Eingriff mit einer Schraube bewerkstelligt gelöst sein muss beziehungsweise die Schraube weiter in die Schraubenaufnahmehülse 10 eingeschraubt wird, bis die Freigabestellung eingenommen worden ist und die Schraube dann herausgedreht wird, um die Bewegungsblockierung aufzuheben.

Bei einer nicht dargestellten Ausgestaltung ist eine Zug- und Eingriffsanordnung vorgesehen, die einen Hebelmechanismus aufweist, der mit dem Endglied verbunden sowie mit dem Trägerteil 24 lösbar in Eingriff bringbar ist und bei Betätigen die Glieder 1, 2 der erfindungsgemäßen Vorrichtung in Längsrichtung von der Vormontagestellung gemäß Fig. 3 in die Fixierstellung gemäß Fig. 4 und von der Fixierstellung gemäß Fig. 4 in die Freigabestellung gemäß Fig. 5 bewegt.

## Patentansprüche

1. Vorrichtung zum Befestigen eines mit zungenartigen Vorsprüngen (25) ausgebildeten Anbauteiles an einem Trägerteil (24) mit miteinander verbundenen Gliedern (1, 2), wobei wenigstens eine Anzahl der Glieder (1, 2) eine einen Aufnahmeraum (14) umgebende Käfigwand (3) aufweisen, an der eine in den Aufnahmeraum (14) hineinragende Rampenstruktur (13) mit einem von einer Eintrittsseite (20) zu einer Austrittsseite (21) des jeweiligen Glieds (1, 2) ansteigend schräg gestellten Schrägstück (17) und einem Haltestück (18) ausgebildet ist, wobei das Haltestück (18) von einer Anlageseite (15) der Käfigwand (3) einen größeren Abstand als der der Eintrittsseite (20) benachbarte Bereich des Schrägstücks (17) aufweist.

2. Vorrichtung nach Anspruch 1, **dadurch gekennzeichnet, dass** die Glieder (1, 2) über flexible einstückige Verbindungsstücke (8) miteinander verbunden sind.

3. Vorrichtung nach Anspruch 1, **dadurch gekennzeichnet, dass** die Glieder über ein Gelenk aufweisende Verbindungsstücke miteinander verbunden sind.

4. Vorrichtung nach einem der Ansprüche 1 bis 3, **dadurch gekennzeichnet, dass** an der Eintrittsseite (20) und an der Austrittsseite (21) an einer der Anlageseite (15) gegenüberliegenden Deckseite (9) der Käfigwand (3) Abdeckungen (11, 12) vorhanden sind.

5. Vorrichtung nach einem der Ansprüche 1 bis 4, **dadurch gekennzeichnet, dass** an der Anlageseite (15) im Bereich der Eintrittsseite (20) eine in den Aufnahmeraum (14) hineinragende biegsame Rastnase (22) ausgebildet ist.

6. Vorrichtung nach einem der Ansprüche 1 bis 5, **dadurch gekennzeichnet, dass** die Rampenstruktur (13) an der Eintrittsseite (20) und an der Austrittsseite (21) mit den Querschnitt erweiternden Einbuchtungen (19) ausgebildet ist.

7. Vorrichtung nach einem der Ansprüche 1 bis 6, **dadurch gekennzeichnet, dass** ein abschlussseitiges Glied (1) mit einer Zug- und Eingriffsanordnung (10) zum Verbinden mit dem Trägerteil (24) und bei Betätigen zum Ausführen einer Bewegung der Glieder (1, 2) relativ zu einer Anordnung von mit dem Trägerteil (24) verbundenen Stiften (26) von einer Vormontagestellung in die Fixierstellung ausgebildet ist.

8. Vorrichtung nach Anspruch 7, **dadurch gekennzeichnet, dass** die Zug- und Eingriffsanordnung eine Gewindeanordnung (10) zum Eingriff mit einem an dem Trägerteil (24) festgelegten Schraube aufweist.

9. Vorrichtung nach Anspruch 7, **dadurch gekennzeichnet, dass** die Zug- und Eingriffsanordnung einen Hebelmechanismus aufweist, der mit dem Trägerteil (24) lösbar in Eingriff bringbar ist.

## Claims

1. Device for fastening an add-on part, which is formed with tongue-like projections (25), to a support part (24) having members (1, 2) connected to one another, at least a number of the members (1, 2) having a cage wall (3) which surrounds a receiving space (14) and on which a ramp structure (13) projecting into the receiving space (14) is formed, which ramp structure has an oblique piece (17) ascending obliquely from an entry side (20) to an exit side (21) of the respective member (1, 2) and a retaining piece (18), the retaining piece (18) being a greater distance away from a contact side (15) of the cage wall (3) than that region of the oblique piece (17) which is adjacent to the entry side (20).

2. Device according to Claim 1, **characterized in that** the members (1, 2) are connected to one another via flexible, integral connecting pieces (8).

3. Device according to Claim 1, **characterized in that** the members are connected to one another via connecting pieces having a joint.

4. Device according to any of Claims 1 to 3, **characterized in that,** on the entry side (20) and on the exit side (21), covers (11, 12) are present on a top (9) of the cage wall (3), which top is opposite the contact side (15).

5. Device according to any of Claims 1 to 4, **characterized in that** a flexible catch (22) projecting into the receiving space (14) is formed on the contact side (15) in the region of the entry side (20).

6. Device according to any of Claims 1 to 5, **characterized in that** the ramp structure (13) is formed on the entry side (20) and on the exit side (21) with recesses (19) increasing the cross-section.

7. Device according to any of Claims 1 to 6, **characterized in that** a terminating member (1) having a traction and engagement arrangement (10) is formed for connection to the support part (24) and, on actuation, for executing a movement of the members (1, 2) relative to an arrangement of pins (26) connected to the support part (24), from a preassembly position to the fixing position.

8. Device according to Claim 7, **characterized in that** the traction and engagement arrangement has a thread arrangement (10) for engagement with a screw fixed to the support part (24).

9. Device according to Claim 7, **characterized in that** the traction and engagement arrangement has a lever mechanism which can be made to detachably engage the support part (24).

## Revendications

1. Dispositif de fixation d'un élément rapporté, muni de protubérances (25) en forme de languettes, sur un élément faisant office de support (24), se composant de maillons (1, 2) reliés ensemble, dans lequel au moins un certain nombre des maillons (1, 2) présentent une configuration en caisson (3) définissant un logement de réception (14), qui comporte une structure en forme de rampe (13) faisant saillie à l'intérieur du logement de réception (14), comprenant un élément oblique (17) allant de la portion d'entrée (20) jusqu'à la portion de sortie (21) du maillon (1, 2) respectif suivant une disposition inclinée, et un élément de retenue (18), l'élément de retenue (18) présentant en l'occurrence, par rapport à la face d'appui (15) de la structure en caisson (3) un intervalle d'écartement plus grand que celui de la zone de l'élément oblique (17) voisine du côté d'entrée (20).

2. Dispositif selon la revendication 1, **caractérisé en ce que** les maillons (1, 2) sont raccordés ensemble par l'intermédiaire d'éléments de liaison flexibles monoblocs (8).

3. Dispositif selon la revendication 1, **caractérisé en ce que** les maillons sont reliés ensemble au moyen d'éléments de raccordement à articulation.

4. Dispositif selon l'une des revendications 1 à 3, **caractérisé en ce qu'**il est prévu, au niveau du côté d'entrée (20) et du côté de sortie (21), des bandeaux de recouvrement (11, 12) sur la face supérieure (9) opposée à la face d'assise (15).

5. Dispositif selon l'une des revendications 1 à 4, **caractérisé en ce qu'**il comporte, au niveau de sa face d'assise (15), dans la zone correspondant au côté d'entrée (20), un ergot d'accrochage souple (22) faisant saillie à l'intérieur du logement de réception (14).

6. Dispositif selon l'une des revendications 1 à 5, **caractérisé en ce que** la structure en forme de rampe (13) comporte, au niveau du côté d'entrée (20) et du côté de sortie (21), des portions concaves (19) qui augmentent sa section transversale.

7. Dispositif selon l'une des revendications 1 à 6, **caractérisé en ce que** le maillon terminal (1) de la séquence comporte un dispositif de traction et de mise en prise d'engagement (10) destiné à assurer le raccordement à l'élément faisant office de support (24) et, lorsqu'il est actionné, à imprimer un mouvement de déplacement aux maillons (1, 2) par rapport à un agencement de broches (26) reliées à l'élément faisant office de support (24), d'une position de montage préalable dans celle d'une immobilisation en position.

8. Dispositif selon la revendication 7, **caractérisé en ce que** le dispositif de traction et de mise en prise d'engagement comporte un système de filetage (10) destiné à être amené en prise d'accouplement avec une vis fixée sur l'élément faisant office de support (24).

9. Dispositif selon la revendication 7, **caractérisé en ce que** le dispositif de traction et de mise en prise d'engagement comporte un mécanisme formant levier qui est destiné à être amené en prise d'engagement, avec une possibilité de dissociation, avec l'élément faisant office de support (24).
